# EUROPÄISCHE PATENTANMELDUNG

(11) **EP 1 909 071 A1**
(43) Veröffentlichungstag der Anmeldung: **09.04.2008**
(21) Anmeldenummer: 06121917.6
(22) Anmeldetag: 06.10.2006
(51) Int. Cl.: G01C 21/36

(54) **Batteriebetriebenes Navigationsgerät**

(71) Anmelder: KlickTel AG, 46284 Dorsten (DE)
(72) Erfinder: Polenske, Boris, 46282 Dorsten (DE); Vengels, Marcus, 46282 Dorsten (DE)
(74) Vertreter: Szynka, Dirk

(57) **Zusammenfassung**

Die Erfindung betrifft ein batteriebetriebenes Navigationsgerät, bei dem abhängig von einer Benutzungssituation zur Batterieschonung bestimmte elektrische Bauteile in ihrer Funktion reduziert werden.

## Beschreibung

Die vorliegende Erfindung betrifft ein batteriebetriebenes Navigationsgerät.

Navigationsgeräte für Straßenkraftfahrzeuge aber auch andere Land-, Wasser- oder Luftfahrzeuge sind seit längerer Zeit bekannt. In vielen Fällen werden sie fest in dem Fahrzeug eingebaut und fahrzeugseitig mit Energie versorgt. In jüngster Zeit finden auch zunehmend Navigationsgeräte Anwendung, die nur vorübergehend mit dem Fahrzeug verbunden werden oder lediglich im Fahrzeug mitgeführt werden. Solche Geräte weisen in der Regel eine Batterie zur Energieversorgung auf, wenngleich sie während des Betriebs in den meisten Fällen dennoch an das Energieversorgungsnetz des Fahrzeugs gekoppelt werden können.

Darüber hinaus werden batteriebetriebene Navigationsgeräte aber auch ohne Fahrzeug eingesetzt, etwa von Wanderern, oder werden in Fahrzeugen eingesetzt, die kein eigenes Energieversorgungssystem oder keinen geeigneten Anschluss aufweisen, etwa Fahrräder, kleinere Segelboote oder Kraftfahrzeuge ohne Zigarettenanzünderanschluss und andere geeignete elektrische Anschlüsse.

Der Erfindung liegt das technische Problem zugrunde, ein in seiner Funktion verbessertes Navigationsgerät mit Batterie anzugeben.

Dieses Problem wird gelöst durch ein Navigationsgerät mit einer Batterie zur Energieversorgung des Navigationsgeräts, dadurch gekennzeichnet, dass das Navigationsgerät dazu ausgelegt ist, abhängig von einer Benutzungssituation elektrische Bauteile des Navigationsgeräts in ihrer Funktion und ihrem Energiebedarf zu reduzieren, um die Batterie zu schonen, sowie durch ein entsprechendes Verfahren zum Betreiben eines Navigationsgeräts.

Bevorzugte Ausgestaltungen sind in den abhängigen Ansprüchen angegeben und werden im Folgenden erläutert. Die Offenbarung einschließlich der Beschreibung des Ausführungsbeispiels bezieht sich dabei stets sowohl auf den Vorrichtungs- als auch auf den Verfahrensaspekt der Erfindung.

Der Erfinder hat festgestellt, dass wesentliche Funktionsverbesserungen bei batteriebetriebenen Navigationsgeräten nicht nur durch Verbesserungen des Leistungsumfangs im Sinne zusätzlicher Funktionen oder durch Verbesserungen ergonomischer Details erzielt werden können, sondern in der Praxis die mit der gegebenen Batteriekapazität verfügbare Betriebszeit einen wesentlichen Aspekt darstellen kann.

Gerade bei batteriebetriebenen Geräten spielen Baugröße und Gewicht eine wesentliche Rolle, was umso mehr für Geräte gilt, die von Fußgängern oder von Nutzern mit Fahrzeugen ohne Energieversorgung benutzt werden sollen, etwa von Seglern oder Radfahrern. In Betracht kommen hier übrigens sowohl dedizierte Navigationsgeräte ohne andere Hauptfunktionen als auch sog. PDAs (Personal Digital Assistants), Palmtops, Mobiltelefone mit entsprechenden Zusatzfunktionen etc. Im Folgenden wird der Einfachheit halber nur noch von Navigationsgeräten gesprochen. Selbst bei Verwendung teurer moderner Batterietechnologien sind die Laufzeiten begrenzt, weil Navigationsgeräte typischerweise viele und zum Teil leistungsfähige und damit auch leistungsintensive elektronische Bauteile benötigen. Besonders gilt dies für die bei Navigationsgeräten praktisch unvermeidbaren Monitore oder Bildschirme und deren Be- oder Hinterleuchtung. Aus Gründen der Detailgenauigkeit der anzuzeigenden Informationen und aus ergonomischen Gründen und verbunden mit einem allgemeinen Preisverfall bei Bildschirmen geht die technische Entwicklung hier zu immer größeren Formaten mit dementsprechend steigendem Strombedarf.

Die Erfindung schlägt vor, ein Navigationsgerät so auszulegen, dass bestimmte elektrische oder elektronische Bauteile dann in einen weniger energieintensiven Betriebsmodus versetzt oder sogar ausgeschaltet werden, wenn die Benutzungssituation geeignet ist. Eine geeignete Benutzungssituation kann sich definieren über die Notwendigkeit einer Energieeinsparung, also insbesondere im Fall knapp werdender Restkapazitäten der Batterie, oder über einen durch den Benutzer absehbar langen Nutzungsbedarf ohne zwischenzeitliche Wiederauflademöglichkeit. Sie kann sich zusätzlich oder alternativ auch definieren über die momentane Möglichkeit zur Funktionseinschränkung oder Ausschaltung bestimmter Komponenten ohne wesentliche Änderungen für den Nutzer. Dies kann beispielsweise das Ausschalten der Bildschirmbeleuchtung betreffen, weil in vielen Fällen die Ablesbarkeit auch ohne Beleuchtung und nur unter Verwendung des Umgebungslichts noch möglich ist. Das Umgebungslicht kann auch bei der Entscheidung über eine Abschaltung oder auch Reduzierung der Bildschirmbeleuchtung mit als Entscheidungskriterium herangezogen werden.

Auch eine Reduzierung der Arbeitstaktfrequenz des Prozessors des Navigationsgeräts ist geeignet. Damit bleibt das Navigationsgerät grundsätzlich in Betrieb und verlangsamt sich lediglich. Vergleichbares gilt für eine Reduktion der Häufigkeit, mit der ein GPS-Empfänger des Navigationsgeräts Satellitenkontakt sucht. Auch hier bleibt das Navigationsgerät im Prinzip verwendbar.

Besonders bevorzugt ist ein Heranziehen der manöveranweisungsfreien vorausliegenden Wegstrecken als Entscheidungskriterium. Bei der Navigation wird die Route vorausberechnet und ist dem Gerät, von Fahrfehlern oder Ausnahmeereignissen abgesehen, im Prinzip im Vorhinein "bekannt". Es ist daher leicht möglich, eine bestimmte Mindestlänge zu definieren, entweder zeitlich oder als Wegstrecke, und bei einem größeren vorausliegenden Streckenabschnitt ohne Manöveranweisung, also unter Verfolgung der aktuellen Straße oder Beibehaltung der Fahrrichtung, bestimmte Funktionseinschränkungen vorzusehen. Dies betrifft den Nutzer wenig oder nicht, weil innerhalb dieses Streckenabschnitts bei normalem Gang der Dinge ohnehin keine Notwendigkeit weiterer Schritte seitens des Navigationsgeräts besteht.

Die in einem solchen Fall getroffenen Maßnahmen können den bisherigen Erläuterungen entsprechen. Auch können weitere Kriterien mit herangezogen werden, etwa das Umgebungslicht im Falle einer Beleuchtungseinschränkung oder die Restkapazität der Batterie. Natürlich können ferner auch Teile des Navigationsgeräts ganz ausgeschaltet werden, und zwar neben der Bildschirmbeleuchtung insbesondere auch der Bildschirm selbst, der Prozessor und/oder der GPS-Empfänger. Wenn der Prozessor ganz ausgeschaltet wird, verfügt das Navigationsgerät über keinerlei Rechenleistung. Wenn allerdings die manöveranweisungsfreie vorausliegende Wegstrecke z. B. unter Annahme der bisherigen Durchschnittsgeschwindigkeit oder unter Berücksichtigung der zu erwartenden Straßenverhältnisse zeitlich abgeschätzt wird, kann trotz abgeschaltetem Prozessor der geräteinterne Zeitgeber ("Clock") weiterlaufen und das Navigationsgerät nach der vorbestimmten Zeit wieder in Betrieb setzen. Wenn andererseits der GPS-Empfänger ausgeschaltet wird, kann das System während dieser Zeit jedenfalls keine GPS-gestützte Positionsbestimmung durchführen und damit entweder nicht oder nur anhand anderer (Fahrzeug-)Daten feststellen, ob der Nutzer beispielsweise die vorgeschriebene Route verlässt. Da allerdings bei manöveranweisungsfreien vorausliegenden Strecken solche Fehler sehr unwahrscheinlich sind, können solche Einschränkungen tolerabel sein.

Ferner kann natürlich jedenfalls bei vermindertem Weiterbetrieb des Prozessors und des GPS-Empfängers eine "Weckfunktion" vorgesehen sein, die bei unvorhergesehenen Ereignissen, etwa bei einem Verlassen der vorberechneten Route durch den Nutzer oder das Fahrzeug, den ursprünglichen Leistungsstand wieder herstellt.

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.
- Figur 1: zeigt eine perspektivische Ansicht eines erfindungsgemäßen Navigationsgeräts.
- Figur 2: zeigt eine schematische Darstellung eines Navigationsablaufs mithilfe des Navigationsgeräts aus Figur 1.

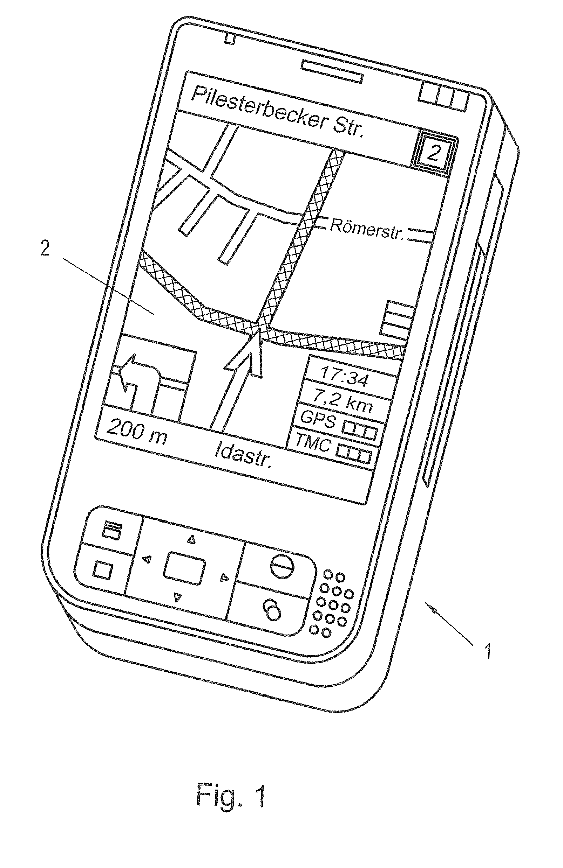

Figur 1 zeigt perspektivisch ein erfindungsgemäßes Navigationsgerät 1. Dabei handelt es sich um ein etwa handtellergroßes Datenverarbeitungsgerät mit einem etwa drei Viertel der Frontfläche des Geräts einnehmenden berührungsempfindlichen Bildschirm 2. Solche Geräte sind teils als dedizierte Navigationsgeräte und anderenteils, wie vorliegend, als PocketPC oder Handheld oder auch Personal Digital Assistant an sich bekannt.

Das Navigationsgerät 1 enthält einen Intel-kompatiblen Prozessor mit einer Taktfrequenz von über 300 MHz und 64 MB Hauptspeicher. Es enthält ferner ein GPS-Modul zur Kommunikation mit einem Satellitennavigationssystem in an sich bekannter Weise und ein GSM-Modul für die Mobiltelefonie. Ein nicht erkennbarer Steckplatz am oberen Rand des Navigationsgeräts 1 enthält eine an sich bekannte austauschbare SD-Speicherkarte. Die SD-Karte dient u. a. als Navigationsdatenspeicher und enthält sogenannte Kartendaten, beispielsweise von Teleatlas NV, Version 3.2005. Die Hardwareausstattung solcher mobiler Datenverarbeitungsgeräte ist an sich bekannt und muss hier nicht im Einzelnen erläutert werden.

Die Bedienung erfolgt neben im unteren Bereich erkennbaren eigentlichen Tastern im Wesentlichen über den berührungsempfindlichen Bildschirm 2. Das Navigationsgerät 1 ist batteriebetrieben, und zwar über einen leistungsfähigen Lithium-lonen-Akku, und eignet sich damit zur Verwendung auch für Fußgänger und Radfahrer oder in anderer Weise unabhängig von einem Fahrzeug mit Leistungsversorgung.

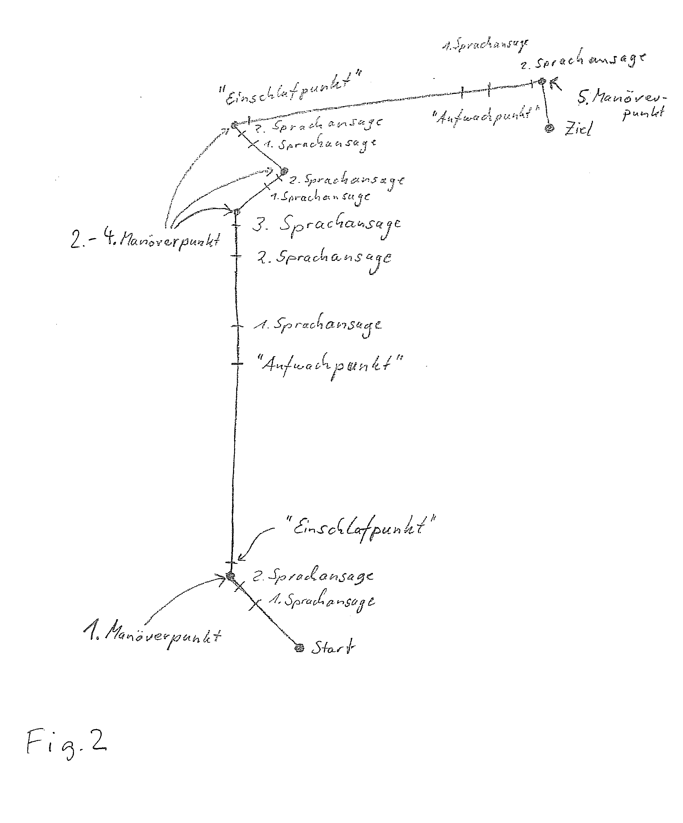

Insbesondere der relativ große Bildschirm 2 mit seiner Hinterleuchtung, aber auch der Prozessor und das GPS-Modul sorgen trotz der Verwendung eines vergleichsweise leistungsfähigen Lithium-Ionen-Akkus für sehr begrenzte nachladefreie Benutzungszeiträume. Auch kann der Lithium-lonen-Akku zugunsten eines reduzierten Gewichts und eines kleinen Bauvolumens nur relativ klein ausgelegt werden. Dementsprechend ist das Navigationsgerät 1 mit erfindungsgemäßen Energiesparfunktionen ausgestattet. Dies wird anhand von Figur 2 im Folgenden erläutert.

Figur 2 zeigt dazu einen schematisierten Routenablauf von einem unten angegebenen Start bis zu einem oben rechts angegebenen Ziel. Am Start wird das Gerät eingeschaltet und ermittelt in der an sich bekannten Weise die dargestellte Route zu dem vorab eingegebenen Ziel. Es "kennt" also bereits die notwendigen Manöver vorab. Insbesondere ist am Start klar, dass der erste Manöverpunkt relativ bald nach dem Start folgt, und zwar nach einer unter einem bestimmten Schwellenwert, beispielsweise 3 km, liegenden Strecke.

Der Navigationsvorgang erfolgt in der an sich bekannten Weise, und zwar mit einer ersten und einer darauf folgenden zweiten Sprachansage in bestimmten Abständen vor dem ersten Manöverpunkt. Diese Abstände sind abhängig von der Fahrtgeschwindigkeit und von dem Abstand des Manöverpunkts von dem vorherigen Manöverpunkt bzw. hier von dem Startpunkt.

Nach Ausführung des Manövers am ersten Manöverpunkt, hier einer Fahrrichtungsänderung nach schräg rechts, ermittelt das Navigationsgerät 1, dass der folgende zweite Manöverpunkt etwa sechs Kilometer voraus liegt. Damit wird kurz nach dem Manöver an dem in Figur 2 so bezeichneten "Einschlafpunkt" ein Stromsparmodus eingeschaltet. In diesem Zustand werden Bildschirm und Bildschirmbeleuchtung vollständig ausgeschaltet, wird der Prozessor in seiner Taktfrequenz auf 100 MHz reduziert und wird die Kartenaktualisierungsgeschwindigkeit per Software zusätzlich verringert. Ferner wird die Häufigkeit der Kontaktaufnahmen des GPS-Moduls mit den Satelliten für die "Einschlafzeit" halbiert.

Wie bereits zuvor erwähnt, bestehen hier durchaus Alternativen. Beispielsweise könnte der Bildschirm in Betrieb bleiben, wobei nur die Beleuchtung dunkler oder ausgeschaltet würde. Andererseits könnten aber auch Prozessor, GPS-Modul, Bildschirm und Bildschirmbeleuchtung vollständig ausgeschaltet werden. Diese Optionen können auch nach Nutzerwahl einstellbar sein und/oder, wie auch der hier mit 3 km angegebene Streckenschwellenwert, abhängig von der noch verfügbaren Batteriekapazität eingestellt werden.

Bei dem in Figur 2 dargestellten Beispiel wird der Stromsparmodus nach gut der Hälfte der Fahrtstrecke zum zweiten Manöverpunkt beendet, nämlich in dem in Figur 2 so bezeichneten "Aufwachpunkt". Dieser Aufwachpunkt ist so gelegt, dass das Navigationsgerät eine ausreichende Zeit oder Strecke, hier etwa 500 m, vor einer ersten Sprachansage zu dem zweiten Manöver durch eine Bildschirmanzeige wieder eine vollständige Orientierung vermittelt. Die anderen Funktionsreduzierungen könnten bestehen bleiben, jedoch wird bei diesem Ausführungsbeispiel der Stromsparmodus grundsätzlich beendet. Nach einer kurzen Orientierungszeit über die etwa 500 m folgt eine erste Sprachansage im Sinne einer Vorankündigung des zweiten Manöverpunktes, und dann eine zweite und dritte Sprachansage, wie an sich bereits bekannt. Man erkennt, dass der Abstand der Sprachansagen von dem zweiten Manöverpunkt größer als von dem ersten Manöverpunkt ist und im Übrigen hier auch drei Sprachansagen vorgenommen werden. Dies liegt an der größeren Fahrtgeschwindigkeit und der größeren zur Verfügung stehenden Strecke zwischen dem ersten und dem zweiten Manöverpunkt.

Übrigens könnte auch die Zeit oder Strecke bis zu der ersten Sprachansage oder einem davor definierten "Aufwachpunkt" mit einem Schwellenwert verglichen werden.

Bei diesem Ausführungsbeispiel wird allerdings die Strecke zwischen den Manöverpunkten als Kriterium verwendet.

Auf das zweite Manöver folgt wiederum eine relativ kurze Strecke mit zwei Sprachansagen bis zu einem dritten Manöverpunkt. Darauf folgt wiederum eine relativ kurze Strecke mit zwei Sprachansagen zu einem vierten Manöverpunkt. Die Abstände sind in beiden Fällen zu kurz für den Stromsparmodus. Nach der Fahrtrichtungsänderung nach schräg rechts am zweiten Manöverpunkt und der Fahrtrichtungsänderung nach links am dritten Manöverpunkt sowie einer Spitzkehre nach rechts am vierten Manöverpunkt folgt dann eine im Wesentlichen gerade Strecke bis zu einem fünften Manöverpunkt. Auch hier kommt es kurz nach dem vierten Manöver zu einem Einschalten des Stromsparmodus an einem "Einschlafpunkt". Nach dem wieder so bezeichneten "Aufwachpunkt" folgen in diesem Fall nur zwei Sprachansagen vor dem fünften Manöverpunkt, weil die Gesamtstrecke zwischen viertem und fünften Manöverpunkt kürzer als die zwischen erstem und zweiten Manöverpunkt ist. Der Stromsparmodus entspricht dem nach dem ersten Manöverpunkt verwendeten.

Am fünften Manöverpunkt wird die Fahrtrichtung nach rechts geändert und kurz darauf das Ziel erreicht.

## Patentansprüche

1. Navigationsgerät (1) mit einer Batterie zur Energieversorgung des Navigationsgeräts (1),
**dadurch gekennzeichnet, dass** das Navigationsgerät (1) dazu ausgelegt ist, abhängig von einer Benutzungssituation elektrische Bauteile (2) des Navigationsgeräts (1) in ihrer Funktion und ihrem Energiebedarf zu reduzieren, um die Batterie zu schonen.

2. Navigationsgerät (1) nach Anspruch 1, das dazu ausgelegt ist, die elektrischen Bauteile (2) dann in ihrer Funktion zu reduzieren, wenn nach einer Manöveranweisung ein über einer bestimmten Mindestlänge liegender Streckenabschnitt bis zur nächsten notwendigen Manöveranweisung folgt.

3. Navigationsgerät (1) nach Anspruch 1 oder 2, das dazu ausgelegt ist, abhängig von der Benutzungssituation eine Bildschirmbeleuchtung des Navigationsgeräts (1) in ihrer Funktion zu reduzieren.

4. Navigationsgerät (1) nach einem der vorstehenden Ansprüche, das dazu ausgelegt ist, abhängig von der Benutzungssituation einen Bildschirm (2) des Navigationsgeräts (1) auszuschalten.

5. Navigationsgerät (1) nach einem der vorstehenden Ansprüche, das dazu ausgelegt ist, abhängig von der Benutzungssituation die Taktfrequenz des Prozessors des Navigationsgeräts (1) zu reduzieren.

6. Navigationsgerät (1) nach einem der vorstehenden Ansprüche, das dazu ausgelegt ist, abhängig von der Benutzungssituation den Prozessor des Navigationsgeräts (1) auszuschalten.

7. Navigationsgerät (1) nach einem der vorstehenden Ansprüche, das dazu ausgelegt ist, abhängig von der Benutzungssituation die Satellitenkontaktfrequenz des GPS-Empfängers des Navigationsgeräts (1) zu reduzieren.

8. Navigationsgerät (1) nach einem der vorstehenden Ansprüche, das dazu ausgelegt ist, abhängig von der Benutzungssituation den GPS-Empfänger des Navigationsgeräts (1) auszuschalten.

9. Verfahren zum Betreiben eines Navigationsgeräts (1),
bei dem das Navigationsgerät (1) von einer Batterie mit Energie versorgt wird,
**dadurch gekennzeichnet, dass** abhängig von einer Benutzungssituation elektrische Bauteile (2) des Navigationsgeräts (1) in ihrer Funktion und ihrem Energiebedarf reduziert werden, um die Batterie zu schonen.

10. Verfahren nach Anspruch 9 unter Verwendung eines Navigationsgeräts (1) nach einem der Ansprüche 2 bis 8.
